(19) Europäisches Patentamt
European Patent Office
Office européen des brevets

(11) EP 1 544 274 A1

(12) **EUROPÄISCHE PATENTANMELDUNG**

(43) Veröffentlichungstag:
**22.06.2005 Patentblatt 2005/25**

(51) Int Cl.[7]: **C09J 133/08**, C09J 151/06, C09J 153/00, C09J 7/00

(21) Anmeldenummer: **04105790.2**

(22) Anmeldetag: **16.11.2004**

(84) Benannte Vertragsstaaten:
**AT BE BG CH CY CZ DE DK EE ES FI FR GB GR HU IE IS IT LI LU MC NL PL PT RO SE SI SK TR**
Benannte Erstreckungsstaaten:
**AL HR LT LV MK YU**

(30) Priorität: **16.12.2003 DE 10359348**

(71) Anmelder: **tesa AG**
**20253 Hamburg (DE)**

(72) Erfinder:
- **Zöllner, Stephan, Dr.**
  **22043, Hamburg (DE)**
- **Husemann, Marc, Dr.**
  **22605, Hamburg (DE)**

(54) **Klebemasse**

(57) Die Erfindung betrifft eine Klebemasse. Dabei ist vorgesehen, daß die Klebemasse

(a) 50 bis 95 Gew.-% eines Hitze-aktivierbaren oder haftklebrigen Polymers aus einem Comonomergemisch, umfassend, bezogen auf das Polymer,

(a1) 40 bis 95 Gew.-% Acrylsäureester und/oder Methacrylsäureester der Formel $CH_2 = CH(R_1)(COOR_2)$, wobei $R_1$ H und/oder $CH_3$ und $R_2$ H und/oder Alkylketten mit 1 bis 30 Kohlenstoffatomen darstellt;

(a2) 5 bis 30 Gew.-% eines ersten copolymerisierbaren Vinyl monomers, das zumindest eine Carbonsäure- und/oder Sulfonsäure- und/oder Phosphonsäuregruppe aufweist;

(a3) 1 bis 10 Gew.-% eines zweiten copolymerisierbaren Vinylmonomers, das zumindest eine Epoxygruppe oder eine Säureanhydridfunktion aufweist; und

(a4) 0 bis 20 Gew.-% eines dritten copolymerisierbaren Vinyl monomers, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet; sowie

(b) 5 bis 50 Gew.-% eines Epoxy-Harzes oder einer Mischung aus mehreren EpoxyHarzen;

umfaßt.

EP 1 544 274 A1

## Beschreibung

Die Erfindung betrifft eine Klebemasse und deren Verwendung für ein Klebeband

Für industrielle Haftklebeband-Anwendungen werden sehr häufig Klebebänder eingesetzt, die hohen Temperaturen standhalten müssen. Dies trifft unter anderem auch für Anwendungen im Automobilbereich zu. Hier werden - insbesondere in der Nähe des Motorbereiches - Klebebänder besonders stark durch stark wechselnde Temperaturen und Kraftstoffe beeinflußt. Diese Eigenschaften werden in sehr guter Form durch vernetzte Acrylathaftklebemassen erfüllt.

Weiterhin können ebenfalls im Industriebereich die unterschiedlichsten Untergründe verklebt werden. Hier kann es z. T. von Vorteil sein, Hitze-aktivierbare Klebemassen einzusetzen, die ab einer bestimmten Temperatur erweichen, sehr gut auf die Substrate auffließen und dann beim Abkühlen einen festen Verbund ergeben.

Neben den bereits beschriebenen Klebebändern steigt - durch höhere Umweltauflagen, insbesondere für die Fabrikation - der Bedarf an besonders umweltfreundlichen Klebebändern, die kein oder ein nur sehr geringes Ausgasungsverhalten aufweisen.

Um dies z. B. für die Anforderungen in der Automobilindustrie zu erreichen, bedarf es für Acrylatklebebänder zweier Technologien. Zum ersten sollten die Klebebänder keine Harze enthalten, da diese bei längerer Temperaturlagerung ausdampfen und somit Niederschläge im Umfeld bilden. Zum zweiten sollten die Klebemassen nach der Hotmelt-Technologie hergestellt werden, d. h. nach der Polymerisation werden alle verbliebenen Lösungsmittel und Restmonomere abgezogen oder abgestrippt, um dann die Klebemasse auf dem Träger zu vernetzen.

Bisher ist es noch nicht gelungen, alle diese Anforderungen der Industrie zu erfüllen. So sind z. B. in US 5,086,088 thermisch aktivierbare Klebemassen beschrieben, die aber zum einen aufgrund ihrer Zusammensetzung und der Anwendung der UV-Polymerisationstechnik nicht die Anforderungen an ein geringes Ausgasungsverhalten erfüllen und zum anderen durch den enthaltenden thermischen Härter nicht aus der Schmelze verarbeiten lassen, da bereits bei der Hotmelt-Verarbeitung die thermische Vernetzungsreaktion initiiert werden würde.

Aufgabe der Erfindung ist es, die Nachteile nach dem Stand der Technik zu beseitigen. Es soll insbesondere eine Klebemasse angegeben werden, die ein geringes Ausgasungsverhalten aufweist und Kraftstoff-resistent ist, wobei sie unter hohen Temperaturen nachvernetzt werden kann, höhere Klebkräfte ausbildet und auch aus der Schmelze verarbeitet werden kann. Ferner soll eine Verwendung einer derartigen Klebemasse angegeben werden.

Diese Aufgabe wird durch die Merkmale der Ansprüche 1 und 10 gelöst. Zweckmäßige Ausgestaltungen der Erfindung ergeben sich aus den Merkmalen der Ansprüche 2 bis 9 sowie 11 und 12.

Nach Maßgabe der Erfindung ist eine Klebemasse vorgesehen, die, bezogen auf die Klebemasse,

(a) 50 bis 95 Gew.-% eines Hitze-aktivierbaren oder haftklebrigen Polymers aus einem Comonomergemisch, umfassend, bezogen auf das Polymer,

> (a1) 40 bis 95 Gew.-% Acrylsäureester und/oder Methacrylsäureester der Formel $CH_2 = CH(R_1)(COOR_2)$, wobei $R_1$ H und/oder $CH_3$ und $R_2$ H und/oder Alkylketten mit 1 bis 30 Kohlenstoffatomen darstellt;
>
> (a2) 5 bis 30 Gew.-% eines ersten copolymerisierbaren Vinylmonomers, das zumindest eine Carbonsäure- und/oder Sulfonsäure- und/oder Phosphonsäuregruppe aufweist;
>
> (a3) 1 bis 10 Gew.-% eines zweiten copolymerisierbaren Vinylmonomers, das zumindest eine Epoxygruppe oder eine Säureanhydridfunktion aufweist; und
>
> (a4) 0 bis 20 Gew.-% eines dritten copolymerisierbaren Vinylmonomers, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet; sowie

(b) 5 bis 50 Gew.-% eines Epoxy-Harzes oder einer Mischung aus mehreren Epoxy-Harzen;

umfaßt.

Überraschenderweise wurde festgestellt, daß die erfindungsgemäße Klebemasse in hervorragender Weise die obengenannten Anforderungen erfüllt.

Je nachdem, ob die Komponente (a) ein Hitze-aktivierbares oder haftklebriges Polymer ist, ist die erfindungsgemäße Klebemasse eine Hitze-aktivierbare oder haftklebrige Klebemasse. Vorzugsweise ist die erfindungsgemäße Klebemasse eine Hitze-aktivierbare Klebemasse.

Das dritte copolymerisierbare Vinylmonomer (Konponente (a4)) sollte eine funktionelle Gruppe aufweisen, die zur Kohäsionssteigerung, zur Erhöhung der Reaktivität der Vernetzung oder zur direkten Vernetzung beitragen

kann.

Im folgenden werden die Komponenten (a1), (a2), (a3) und (a4) auch als Monomere (a1), (a2), (a3) und (a4) bezeichnet. Komponente (a) wird auch als Polymer (a) oder Polymer bezeichnet, wobei zu berücksichtigen ist, daß das Polymer selbst bereits eine Klebemasse oder Haftkiebemasse darstellt.

Das Polymer, Verfahren zur Herstellung des Polymers, Komponente (b) sowie Verfahren zur Herstellung der erfindungsgemäßen Klebemasse aus Komponente (a) und Komponente (b) werden nachstehend näher erläutert.

Polymer (a)

Das Polymer (a) kann eine Hitze-aktivierbare Haftklebemasse umfassen, die unter Temperatureinwirkung und optionalem Druck haftklebrig wird und nach der Verklebung und Abkühlen durch die Verfestigung eine hohe Klebkraft aufbaut. Je nach Anwendungstemperatur weisen diese Hitze-aktivierbaren Haftkiebemassen unterschiedliche statische Glasübergangstemperaturen $T_{G,A}$ oder Schmelzpunkte $T_{S,A}$ auf.

In einer sehr bevorzugten Ausführungsform werden für die Monomere (a1) Acrylmonomere eingesetzt, die Acryl- und Methacrylsäureester mit Alkylgruppen, bestehend aus 4 bis 14 Kohlenstoffomen, bevorzugt 4 bis 9 C-Atomen, umfassen. Spezielle Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat und deren verzweigten Isomere, wie z. B. 2-Ethylhexylacrylat. Weitere einzusetzende Verbindungsklassen, die ebenfalls in geringen Mengen unter (a1) hinzugesetzt werden können, sind Methylmethacrylate, Cyclohexylmethacrylate, Isobornylacrylat und Isobornylmethacrylate.

In einer bevorzugten Weise werden als Monomere (a2) Itaconsäure, Acrylsäure, Methacrylsäure, Vinylessigsäure, Fumarsäure, Crotonsäure, Aconitsäure, Dimethylacrylsäure, β-Acryloyloxypropionsäure, Trichloracrylsäure, Vinylphosphonsäure und Vinylsulfonsäure eingesetzt werden.

In einer bevorzugten Weise werden als Monomere (a3) Glycidylmethacrylat Maleinsäureanhydrid und Itaconsäureanhydrid eingesetzt.

In einer sehr bevorzugten Ausführungsform werden für die Monomere (a4) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylnitril.

In einer weiteren sehr bevorzugten Ausführungsform für die Komponente (a4) werden Monomere mit folgenden funktionellen Gruppen eingesetzt: Hydroxy-, Säureamid-, Isocyanato- oder Aminogruppen.

Weitere besonders bevorzugte Beispiele für die Komponente (a4) sind Hydroxyethylacrylat, Hydroxypropylacrylat, Hydroxyethylmethacrylat, Hydroxypropylmethacrylat, Allylalkohol, Acrylamid, Benzylacrylat, Benzylmethacrylat, Phenylacrylat, Phenylmethacrylat, t-Butylphenylacrylat, t-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, 6-Hydroxyhexylmethacrylat, N-tert.-Butylacrylamid, N-Methylolmethacrylamid, N-(Butoxymethyl)methacrylamid, N-Methylolacrylamid, N-(Ethoxymethyl)acrylamid, N-Isopropylacrylamid, Tetrahydrofurfurylacryat, wobei diese Aufzählung nicht abschließend ist.

In einer weiteren bevorzugten Ausführungsform werden für die Komponente (a4) aromatische Vinylverbindungen eingesetzt, wobei die aromatischen Kerne bevorzugt aus $C_4$ bis $C_{18}$ bestehen und auch Heteroatome enthalten können. Besonders bevorzugte Beispiele sind Styrol, 4-Vinylpyridin, N-Vinylphthalimid, Methylstyrol, 3,4-Dimethoxystyrol und 4-Vinylbenzoesäure, wobei diese Aufzählung nicht abschließend ist.

Zur Polymerisation werden die Monomere wiederum dermaßen gewählt, daß die resultierenden Polymere als industriell verwendbare Klebemassen oder Haftkiebemassen eingesetzt werden können, insbesondere derart, daß die resultierenden Polymere klebende oder haftklebende Eigenschaften entsprechend des "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der *Fox*-Gleichung (G1) bei der Zusammenstellung der Monomermischung, welche der Polymerisation zugrunde liegt, erzielt werden. Für Haftkiebemassen liegt die statische Glasübergangstemperatur des resultierenden Polymers vorteilhaft unterhalb 15 °C.

Zur Erzielung einer Glasübergangstemperatur $T_{G,A}$ der Polymere von $T_{G,A} \geq 30$ °C für Hitze-aktivierbaren Klebemassen werden entsprechend dem vorstehend gesagten die Monomere sehr bevorzugt derart ausgesucht und die mengenmäßige Zusammensetzung der Monomermischung vorteilhaft derart gewählt, daß sich nach der *Fox*-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G}\sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Polymere werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben-Weyl, Methoden der Organischen Chemie, Vol. E 19a, S. 60-147, beschrieben. Diese Methoden werden in bevorzugter Weise in Analogie angewendet.

Beispiele für Radikalquellen sind Peroxide, Hydroperoxide und Azoverbindungen, als Beispiele für typische Radikalinitiatoren seien hier genannt Kaliumperoxodisulfat, Dibenzoylperoxid, Cumolhydroperoxid, Cyclohexanon peroxid , Di-t-butylperoxid, Azodiisosäurebutyronitril, Cyclohexylsulfonylacetylperoxid, Diisopropyl-percarbonat, t-Butylperoktoat, Benzpinacol, wobei diese Aufzählung nicht abschließend ist. In einer besonders bevorzugten Ausführungsform wird als radikalischer Initiator 1,1'-Azo-bis-(cyclohexancarbonsäurenitril) (Vazo 88™ der Fa. DuPont) verwendet.

Die mittleren Molekulargewichte $M_n$ der bei der radikalischen Polymerisation entstehenden Haftkiebemassen werden sehr bevorzugt derart gewählt, daß sie in einem Bereich von 20.000 bis 2.000.000 g/mol liegen; speziell für die weitere Verwendung als Schmelzhaftkleber werden Haftkiebemassen mit mittleren Molekulargewichten $M_n$ von 100.000 bis 500.000 g/mol hergestellt. Die Bestimmung des mittleren Molekulargewichtes erfolgt über Größenausschlußchromatographie (SEC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wässerigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden aus der Gruppe gewählt, die aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon besteht.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide des Typs (NIT 1) oder (NIT 2) eingesetzt:

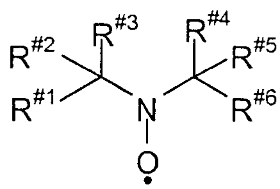

(NIT 1)

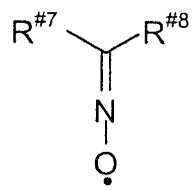

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z. B. Chlor, Brom oder Iod;
ii) lineare, verzweigte, cyclische und heterocyclische Kohlenwasserstoffe mit 1 bis 20 Kohlenstoffatomen, die gesättigt, ungesättigt oder aromatisch sein können;
iii) Ester $-COOR^{\#9}$ , Alkoxide $-OR^{\#10}$ und/oder Phosphonate $-PO(OR^{\#11})_2$, wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein (wobei es bevorzugt wird, daß zumindest einer der oben genannten Reste eine derartige Polymerkette darstellt) und somit zum Aufbau von Blockcopolymeren als Makroradikale oder Makroregler genutzt werden.
Stärker bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-Dimethyl-4,5-cyclohexyl-PROXYL, 3-Oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxylpyrrolidinyloxyl (TEMPO), 4-Benzoyloxy-TEMPO, 4-Methoxy-TEMPO, 4-Chlor-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methylpropylnitroxid
- N-tert.-Butyl-1-(2-naphtyl)-2-methylpropylnitroxid
- N-tert.-Butyl-1-diethylphosphono-2,2-dimethylpropylnitroxid
- N-tert.-Butyl-1-dibenzylphosphono-2,2-dimethylpropylnitroxid
- N-(1-Phenyl-2-methyl propyl)-1-diethylphosphono-1-methylethylnitroxid
- Di-t-Butylnitroxid
- Diphenylnitroxid
- t-Butyl-t-amylnitroxid

Eine Reihe weiterer Polymerisationsmethoden, nach denen die Klebemassen in alternativer Vorgehensweise hergestellt werden können, lassen sich aus dem Stand der Technik wählen:
US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).
Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in US 5,945,491 A, US

5,854,364 A und US 5,789,487 A beschrieben.

Weiterhin kann das erfindungsgemäß genutzte Polymer vorteilhaft über eine anionische Polymerisation hergestellt werden. Hier werden als Reaktionsmedium bevorzugt inerte Lösungsmittel verwendet, wie z. B. aliphatische und cycloaliphatische Kohlenwasserstoffe oder auch aromatische Kohlenwasserstoffe.

Das lebende Polymer wird im allgemeinen durch die Struktur $P_L$(A)-Me repräsentiert, wobei Me ein Metall der Gruppe I des Periodensystems, wie z. B. Lithium, Natrium oder Kalium, und $P_L$(A) ein wachsender Polymerblock aus den Monomeren [a1)-a4)] ist. Die Molmasse des herzustellenden Polymers wird durch das Verhältnis von Initiatorkonzentration zu Monomerkonzentration vorgegeben.

Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei $\phi$ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann.

Der Phenylring $\phi$ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne daß diese Liste Anspruch auf Vollständigkeit erhebt.

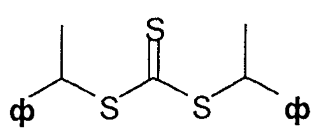

(TTC 1)

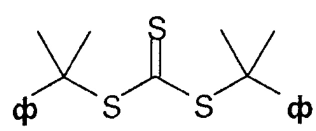

(TTC 2)

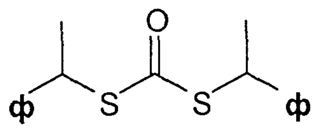

(THI 1)

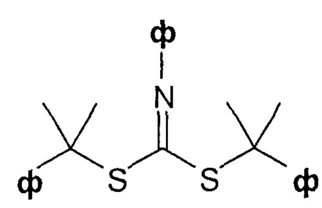

(THI 2)

Außerdem können Thioester der allgemeinen Struktur

$$R^{\$1}\text{-}C(S)\text{-}S\text{-}R^{\$2} \qquad \text{(THE)}$$

zum Einsatz kommen, insbesondere, um asymmetrische Systeme herzustellen. Dabei können $R^{\$1}$ und $R^{\$2}$ unabhängig voneinander gewählt werden, wobei $R^{\$1}$ ein Rest aus einer der folgenden Gruppen i) bis iv) und $R^{\$2}$ ein Rest aus einer der folgenden Gruppen i) bis iii) sein kann:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterozyklen;

ii) $-NH_2$, $-NH-R^{\$3}$, $-NR^{\$3}R^{\$4}$, $-NH-C(O)-R^{\$3}$, $-NR^{\$3}-C(O)-R^{\$4}$, $-NH-C(S)-R^{\$3}$, $-NR^{\$3}-C(S)-R^{\$4}$,

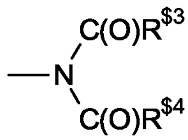 , 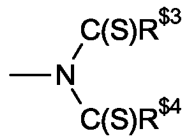 , 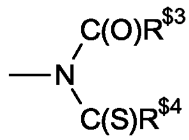

wobei $R^{\$3}$ und $R^{\$4}$ unabhängig voneinander gewählte Reste aus der Gruppe i) sind;

iii) $-S-R^{\$5}$, $-S-C(S)-R^{\$5}$, wobei $R^{\$5}$ ein Rest aus einer der Gruppen i) oder ii) sein kann;

iv) $-O-R^{\$6}$, $-O-C(O)-R^{\$6}$, wobei $R^{\$6}$ ein Rest aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azooder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als Beispiele für typische Radikalinitiatoren seien hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol, wobei die Aufzählung nicht abschließend ist. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.

Epoxy-Harze (b)

Die in diesem Patent beschriebenen Epoxy-Harze umfassen die gesamte Gruppe der Epoxyverbindungen. So können die Epoxy-Harze Monomere, Oligomere oder Polymere sein. Polymere Epoxy-Harze können aliphatischer, cycloaliphatischer, aromatischer oder heterocyclischer Natur sein. Die Epoxy-Harze weisen bevorzugt zumindest 2 Epoxy-Gruppen auf, die zur Vernetzung genutzt werden können.

Das Molekulargewicht der Epoxy-Harze variiert von 100 g/mol bis zu maximal 25000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak-Harze) und Epichlorhydrin, Glycidylester, das Reaktionsprodukt aus Epichlorhydrin und p-Aminophenol.

Bevorzugte kommerzielle Beispiele sind z. B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071,

HPT™ 1079 ebenfalls von Shell Chemical.

Beispiele für kommerzielle aliphatische Epoxy-Harze sind z. B. Vinylcyclohexandioxide, wie ERL-4206, ERL-4221, ERL 4201, ERL-4289 oder ERL-0400 von Union Carbide Corp.

In einer möglichen Ausführungsform enthält die erfindungsgemäße Klebemasse weitere Rezeptierungsbestandteile, wie zum Beispiel Füllstoffe, Pigmente, rheologische Additive, Additive zur Verbesserung der Haftung, Weichmacher, Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb-Zeolithe, Calciumoxid), Fließ- und Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Es kommen alle Arten organischer oder anorganischer Farbpigmente in Frage, beispielsweise Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusölderivat-Pulver.

Additive zur Verbesserung der Haftung können zum Beispiel Stoffe aus den Gruppen der Polyamide, Epoxide oder Silane sein.

Beispiele für Weichmacher sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane.

Geeignete Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5-, C-9-, $(C\text{-}5)_2$-Harze), gemischte C-5/C-9-Harze, hydrierte und teilhydrierte Derivate der genannten Typen, Harze aus Styrol oder $\alpha$-Methylstyrol sowie Terpen-Phenolharze und weitere wie aufgeführt in Ullmanns Enzyklopädie der technischen Chemie (4. Aufl.), Band 12, S. 525-555, Weinheim.

Geeignete Elastomere sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Die Rezeptierung der erfindungsgemäßen Klebmasse mit weiteren Bestandteilen, wie zum Beispiel Füllstoffen und Weichmachern, ist ebenfalls Stand der Technik.

Die Klebemasse kann nach verschiedenen Verfahren hergestellt werden, von denen einige nachfolgend beschrieben werden.

Die Klebemassen können direkt, im indirekten Transferverfahren, durch Coextrusion, aus Lösung, Dispersion oder Schmelze aufgetragen werden.

Entsprechend dem Auftragsverfahren wird das Polymer (a) mit dem oder den Epoxy-Harzen (b) abgemischt. Für die Beschichtung aus Lösung wird in bevorzugter Weise das Epoxy-Harz (b) in Lösung zum Polymer (a) hinzugegeben und eingerührt. Hierfür können alle dem Fachmann bekannten Rührtechniken eingesetzt werden. Auch können zur Herstellung einer homogenen Mischung statische oder Dynamische Mischaggregate eingesetzt werden.

Für die Beschichtung aus der Schmelze wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. In einer bevorzugten Ausführungsform liegt der Restlösemittelanteil unter 1 Gew.-%, sehr bevorzugt unter 0.5 Gew.-%.

Die Abmischung mit den Epoxy-Harzen (b) wird in bevorzugter Weise ebenfalls in der Schmelze vorgenommen. Hierfür können Kneter oder ebenfalls Doppelschneckenextruder eingesetzt werden. Die Abmischung erfolgt bevorzugt in der Wärme, wobei die Aktivierungstemperatur zur Reaktion der Epoxy-Harze (b) mit dem Polymer (a) im Mischaggregat deutlich unterschritten werden sollte.

Zur optionalen Vernetzung mit UV-Licht werden den Klebemassen UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthylsulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London, zu Rate gezogen werden.

Prinzipiell ist es auch möglich, die erfindungsgemäßen Klebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Schließlich betrifft die Erfindung die Verwendung der vorstehend beschriebenen Klebemassen für ein einoder doppelseitiges Klebeband, bestehend aus zumindest einem Träger und einer Schicht einer Haftkiebemasse.

Als Trägermaterialien für die Klebemasse, beispielsweise für Klebebänder, werden die dem Fachmann geläufigen und üblichen Materialien, wie Folien (Polyester, PET, PE, PP, BOPP, PVC, Polyimid), Vliese, Schäume, Gewebe und Gewebefolien sowie Trennpapier (Glassine, HDPE, LDPE) verwendet. Es kann auch auf Metallfolien, wie z. B. Aluminium oder Kupfer beschichtet werden. In einer weiteren Ausführungsform werden mit der Klebemasse Laminate aus Polyimid und Kupferfolien hergestellt. Diese Aufzählung ist nicht abschließend.

Beispiele

TESTMETHODEN

A. T-Peel-Test mit FPCB

Die Klebstoffolie wird auf die Polyimidfolie des Laminates Polyimid/Kupferfolie (ein sogenanntes FPCB, wobei FPCB für flexible gedruckte Schaltung steht) bei 100 °C auflaminiert. Anschließend wird mit einer zweiten Polyimidfolie dieser Vorgang wiederholt und somit eine Klebfuge zwischen zwei Polyimid/Kupferfolien-Laminaten hergestellt, wobei jeweils die Polyimidfolien miteinander verklebt sind. Zur Aushärtung wird der Verbund in einer beheizbaren Presse der Fa. Bürkle bei 170 °C für 30 Minuten bei einem Druck von 50 N/cm$^2$ verpreßt.

Anschließend wird mit einer Zugprüfmaschine der Fa. Zwick der Verbund im 180° Ziehwinkel mit einer Geschwindigkeit von 50 mm/min auseinander gezogen und die Kraft in N/cm gemessen. Die Messung wird bei 20 °C unter 50 % Feuchtigkeit durchgeführt. Die Meßwerte werden dreifach bestimmt und gemittelt.

B. Lötbadbeständigkeit

Ein mit den Beispielen nach Testmethode A verklebter FPCB-Verbund wird für 10 Sekunden in ein 288 °C heißes Lötbad vollständig eingetaucht. Die Verklebung gilt als Lötbadbeständig, wenn sich keine Luftblasen bilden, die die Polyimidfolie des FPCB's aufblähen lassen. Der Test gilt als nicht bestanden, wenn bereits eine leichte Blasenbildung eintritt.

C. Verklebungsfestigkeit

Die Verklebungsfestigkeit wurde analog DIN EN 1465 gemessen. Die Meßwerte werden in N/mm$^2$ angegeben.

D. Klebkraft

Die Prüfung der Schälfestigkeit (Klebkraft) erfolgte gemäß PSTC-1. Auf eine 25 mm dicke PET-Folie wird eine Schicht der Klebemasse mit 50 g/m$^2$ aufgebracht, wodurch eine Klebstoffolie erhalten wird.

Ein 2 cm breiter Streifen dieser Klebstoffolie wird auf eine Stahlplatte durch dreimaliges doppeltes Überrollen

mittels einer 2-kg-Rolle verklebt. Die Platte wird eingespannt und der Streifen über sein freies Ende an einer Zugprüfmaschine unter einem Schälwinkel von 180° mit einer Geschwindigkeit von 300 mm/min abgezogen.

E. Ausgasungsverhalten

Die leicht-flüchtigen Bestandteile wurden über GC-MS ermittelt. Die Probenvorbereitung fand analog Testmethode F statt. Als Meßgeräte wurden verwendet:

GC: Hewlett Packard HP 5890 SERIES 11
MS: Hewlett Packard HP 5989 A

Zur Messung wurde eine DB-5-Säule mit 60 m Länge, 0,25 mm Innendurchmesser und 1 mm Filmdicke eingebaut. Die Messung erfolgte mit einem Temperaturprogramm 50 °C (3 min) - 150 C/min - 260 °C (2 min). Als Trägergas wurde Wasserstoff (90 kPa) mit einem Strom von 1 ml/min benutzt. Das Splitverhältnis betrug 1 : 10. Der Test gilt als erfüllt, wenn die Menge der flüchtigen Anteile 2000 mg/g nicht überschreitet.

F. Dieselfestigkeit

Die Klebemasse wurde im Transferverfahren mit 50 g/$m^2$ auf ein Maliwattvlies kaschiert. Ein 2 cm breiter Streifen dieses Musters wird anschließend um einen aus 10 Kabeln bestehenden Kabelbaum mit einem Durchmesser von 10 mm gewickelt und für 48 Stunden bei 100 °C gelagert. Dann wird der Kabelbaum U-förmig gebogen und in den Dieselkraftstoff getaucht, wobei das Klebebandende aus dem Dieselkraftstoff herausragt.

Der gesamte Verbund wird für 5 Minuten oder für 24 h in dem Kraftstoff gelagert, dann nimmt man den Kabelbaum mit Klebeband heraus, läßt 2 Minuten den Dieselkraftstoff abtropfen und biegt dann den Kabelsatz um einen Dorn mit einem Durchmesser von 50 mm. Der Test wird bestanden, wenn sich keine Tüten und Falten bilden, die Klebemasse sich nicht ablöst, die Klebemasse nicht schwammig wird und auch keine Farbablösungen auftreten.

Beispiele

Nachfolgend werden Beispiele erfindungsgemäßer Klebemassen und deren Herstellung beschrieben. Unter Verwendung der erfindungsgemäßen Klebemassen wurden Klebstoffolien hergestellt. Die verwendeten kommerziellen Produkte werden vom Hersteller wie folgt charakterisiert:

| Hersteller | Produktname | Epoxy-Äquivalente | Typ |
|---|---|---|---|
| Vianova Resins | Beckopox EP 301 | 450- 525 | Epoxy-Harz |
| Ciba Geigy | Irgacure™651 | - | UV-Photoinitiator |

Beispiel 1:

Ein für radikalische Polymerisationen konventioneller 2-L-Glasreaktor wurde mit 40 g Acrylsäure, 260 g 2-Ethylhexylacrylat und 266 g Aceton/Siedegrenzenbenzin 60/95 (2 : 1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont), gelöst in 10 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN, gelöst in 10 g Aceton, hinzugegeben. Nach 5 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 6 Stunden wurde mit 100 g Aceton verdünnt. Nach 7 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 10 Stunden wurde mit 150 g Aceton verdünnt. Die Reaktion wurde nach 24 h Reaktionszeit abgebrochen und auf Raumtemperatur abgekühlt. Anschließend wurde das so erhaltene Polyacrylat mit 0,4 g Irgacure 651 abgemischt, auf einen Feststoffgehalt von 30 % mit Methylethylketon verdünnt und dann 40 g Beckopox™ EP 301 von Vianova Resins hinzugegeben. Die Lösung wurde dann auf eine PET-Folie beschichtet, wodurch eine Klebstoffolie erhalten wurde. Nach Trocknung für 30 Minuten bei 90 °C betrug der Masseauftrag 50 g/$m^2$.

Zur UV-Härtung wurde eine UV-Anlage der Fa. Eltosch eingesetzt. Die Anlage ist mit einem Hg-dotierten UV-Strahler ausgerüstet. Die Intensität des Strahlers beträgt 200 W/cm. Die zu vernetzende Klebstoffolie wurden mit 10 m/min durch die Anlage gefahren, wobei zur Erhöhung der Bestrahlungsdosis je Muster in mehreren Durchgängen (6) bestrahlt wurde.

Zur Analyse der klebtechnischen Eigenschaften wurden die Testmethoden D, E und F durchgeführt.

Beispiel 2:

Ein für radikalische Polymerisationen konventioneller 2-L-Glasreaktor wurde mit 40 g Acrylsäure, 240 g Butylacrylat, 80 g tert.-Butylacrylat, 40 g Methylmethacrylat und 200 g Aceton/Siedegrenzenbenzin 60/95 (2 : 1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont), gelöst in 10 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN, gelöst in 10 g Aceton, hinzugegeben. Nach 5 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 6 Stunden wurde mit 100 g Aceton verdünnt. Nach 7 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 10 Stunden wurde mit 150 g Aceton verdünnt. Die Reaktion wurde nach 24 h Reaktionszeit abgebrochen und auf Raumtemperatur abgekühlt. Anschließend wurde das so erhaltene Polyacrylat mit 0,4 g Irgacure 651 abgemischt, auf einen Feststoffgehalt von 30 % mit Methylethylketon verdünnt und dann 60 g Beckopox™ EP 301 von Vianova Resins hinzugegeben. Die Lösung wurde dann auf eine PET-Folie beschichtet, wodurch eine Klebstoffolie erhalten wurde. Nach Trocknung für 30 Minuten bei 90 °C betrug der Masseauftrag 50 g/m$^2$.

Zur UV-Härtung wurde eine UV-Anlage der Fa. Eltosch eingesetzt. Die Anlage ist ausgerüstet mit einem Hg-dotierten UV-Strahler. Die Intensität des Strahlers beträgt 200 W/cm. Die zu vernetzenden Klebstoffolie wurden mit 10 m/min durch die Anlage gefahren, wobei zur Erhöhung der Bestrahlungsdosis je Muster in mehreren Durchgängen (6) bestrahlt wurde.

Zur Analyse der klebtechnischen Eigenschaften wurden die Testmethoden A, B und C durchgeführt.

Beispiel 3:

Ein für radikalische Polymerisationen konventioneller 2-L-Glasreaktor wurde mit 40 g Acrylsäure, 240 g Butylacrylat, 80 g tert.-Butylacrylat, 40 Methylmethacrylat und 200 g Aceton/Siedegrenzenbenzin 60/95 (2 : 1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont), gelöst in 10 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN, gelöst in 10 g Aceton, hinzugegeben. Nach 5 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 6 Stunden wurde mit 100 g Aceton verdünnt. Nach 7 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton hinzugegeben. Nach 10 Stunden wurde mit 150 g Aceton verdünnt. Die Reaktion wurde nach 24 h Reaktionszeit abgebrochen und auf Raumtemperatur abgekühlt. Anschließend wurde das Polyacrylat auf einen Feststoffgehalt von 30 % mit Methylethylketon verdünnt und dann 40 g Beckopox™ EP 301 von Vianova Resins hinzugegeben. Die Lösung wurde dann auf eine PET-Folie beschichtet, wodurch eine Klebstoffolie erhalten wurde. Nach Trocknung für 30 Minuten bei 90 °C betrug der Masseauftrag 50 g/m$^2$.

Zur Analyse der klebtechnischen Eigenschaften wurden die Testmethoden A, B und C durchgeführt.

Beispiel 4:

Ein für radikalische Polymerisationen konventioneller 2-L-Glasreaktor wurde mit 40 g Acrylsäure, 240 g 2-Ethylhexylacrylat, 40 g tert.-Butylacrylat, 20 g Acrylonitril, 60 g Methylmethacrylat und 200 g Aceton/Siedegrenzenbenzin 60/95 (2 : 1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont), gelöst in 10 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 6 Stunden wurde mit 100 g Aceton verdünnt. Nach 7 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 10 Stunden wurde mit 150 g Aceton verdünnt. Die Reaktion wurde nach 24 h Reaktionszeit abgebrochen und auf Raumtemperatur abgekühlt. Anschließend wurde das Polyacrylat auf einen Feststoffgehalt von 30 % mit Methylethylketon verdünnt und dann 40 g Beckopox™ EP 301 von Vianova Resins hinzugegeben. Die Lösung wurde dann auf eine PET-Folie beschichtet, wodurch eine Klebstoffolie erhalten wurde. Nach Trocknung für 30 Minuten bei 90 °C betrug der Masseauftrag 50 g/m$^2$.

Zur Analyse der klebtechnischen Eigenschaften wurden die Testmethoden A, B und C durchgeführt.

Referenzbeispiel

Als Referenzbeispiel wurde Pyralux® LF001 der Fa. DuPont mit 25 mm Klebfolienstärke eingesetzt.

Ergebnisse

Beispiel 1 stellt ein haftklebriges System dar, welches z. B. besonders bevorzugt im Automobilbereich eingesetzt wird. Zur Bestimmung der Klebkraft wurde zunächst Test D durchgeführt. Die Klebkraft nach Test D lag bei 6,9 N/cm. Dieser Wert bestätigt wiederum die haftklebrigen Eigenschaften für Beispiel 1. Ein analoger Test wurde mit UV-acResin 258™ der Fa. BASF durchgeführt. Dieses Produkt wird sehr häufig im Automobilbereich zur Verklebung von Kabelbandagierbändern eingesetzt. Hier lag die Klebkraft unter identischen Bedingungen bei 4,1 N/cm.

In einem weiteren Test wurde die Dieselbeständigkeit von Beispiel 1 untersucht. Hierfür wurde Beispiel 1 auf Trennpapier beschichtet und dann auf einen Maliwattvlies umkaschiert, der für viele Kabelbandagierklebebänder als Trägermaterial eingesetzt wird. Dann wurde die Prüfmethode F mit diesem Muster durchgeführt. Der Tabelle 1 kann entnommen werden, daß das Muster den Dieseltest bestanden hat und somit als dieselfest eingestuft werden kann.

Tabelle 1

| Beispiel1 | Beurteilung | |
|---|---|---|
| | nach 5 min | nach 24 h |
| | | |
| Tütenbildung | nein | nein |
| Faltenbildung | nein | nein |
| Klebstoffablösung | nein | nein |
| Schwammigkeit | nein | nein |
| Farbablösung | nein | nein |
| Gesamturteil | dieselfest | |

Für die Eignung als Haftklebemasse in dem Automobilbereich ist weiterhin das Ausgasungsverhalten von hoher Bedeutung, da Automobilhersteller den "Neuwagengeruch" im Auto minimieren möchten. Daher wurde das Ausgasungsverhalten dieser Haftklebebänder zusätzlich bestimmt. Das Ausgasungsverhalten ist nicht mit dem Foggingtest (s. z. B. DE 198 07 752) gleichzusetzen, da hier leichtflüchtige Bestandteile detektiert werden, die den Geruch verursachen. Im Foggingtest werden eher Bestandteile nachgewiesen, die sich auf der Scheibe niederschlagen können und z. B. Harzzusätzen entstammen. Zur Überprüfung wurde daher das Ausgasungsverhalten via Headspace-GC ermittelt. Die Meßwerte sind in Tabelle 2 dargestellt.

Tabelle 2

| Beispiel | Flüchtige Anteile [µg/g] |
|---|---|
| 1 | 124 |

Der gemessene Wert ist für eine Harz-abgemischte Masse sehr niedrig und erfüllt somit ohne weiteres die Anforderungen.

Beispiel 1 belegt, daß die erfindungsgemäße Klebemasse sehr gut zur Verklebung im Automobilbereich eingesetzt werden kann. Gegenüber den eingesetzten Harz-abgemischten Haftkiebemassen weisen die erfindungsgemäßen Klebemassen ein sehr gutes Ausgasungsverhalten gegenüber Harz-abgemischten Acrylathaftklebemassen auf. Gegenüber Reinacrylaten weisen sie eine verbesserte Haftklebrigkeit auf.

Eine weitere Anwendung der erfindungsgemäßen Klebemassen ist die Verwendung als Hitze-aktivierbare Klebemasse.

Zur klebtechnischen Beurteilung der Beispiele 2 bis 4 wurde zunächst der T-Peel-Test mit FPCB-Material durchgeführt. Die entsprechenden Meßwerte sind in Tabelle 3 aufgelistet.

Tabelle 3

| | Test A / T-Peel Test [N/cm] |
|---|---|
| Beispiel 2 | 7,3 |
| Beispiel 3 | 7,8 |
| Beispiel 4 | 9,6 |
| Referenzbeispiel | 6,5 |

Tabelle 3 ist zu entnehmen, daß mit den Beispielen 1 bis 3 sehr hohe Verklebungsfestigkeiten bereits nach 30 Minuten Aushärtung erzielt wurden. So liegen die gemessenen Werte oberhalb des Wertes für das Referenzbeispiel.

Ein weiteres Kriterium für die Anwendung von Hitze-aktivierbaren Klebstoffolien zur Verklebung von FPCB's ist die Lötbadbeständigkeit (Testmethode B).

In Tabelle 4 sind die Ergebnisse der Lötbadbeständigkeit angegeben.

Tabelle 4

| | Test B / Lötbadbeständigkeit |
|---|---|
| Beispiel 2 | Bestanden |
| Beispiel 3 | Bestanden |
| Beispiel 4 | Bestanden |
| Referenzbeispiel | Bestanden |

Aus den Ergebnissen wird ersichtlich, daß alle Beispiele lötbadbeständig sind und somit den Anforderungen der FPCB-Industrie gerecht werden.

Ein weiteres Kriterium für eine Verwendung einer Hitze-aktivierbaren Klebstoffolien ist die Messung der Scherbelastbarkeit der Klebstoffolie. In Tabelle 5 sind die entsprechenden gemessenen Werte angegeben.

Tabelle 5

| | Test C / Verklebungsfestigkeit in $N/mm^2$ |
|---|---|
| Beispiel 1 | 10,8 |
| Beispiel 2 | 12,4 |
| Beispiel 3 | 9,7 |
| Referenz | 6,0 |

Tabelle 5 ist zu entnehmen, daß die in dieser Erfindung beschriebenen Klebstoffolien eine bedeutend höhere Verklebungsfestigkeit als das Referenzbeispiel besitzen.

**Patentansprüche**

**1.** Klebemasse, umfassend, bezogen auf die Klebemasse,

(a) 50 bis 95 Gew.-% eines Hitze-aktivierbaren oder haftklebrigen Polymers aus einem Comonomergemisch, umfassend, bezogen auf das Polymer,

(a1) 40 bis 95 Gew.-% Acrylsäureester und/oder Methacrylsäureester der Formel $CH_2 = CH(R_1)(COOR_2)$, wobei $R_1$ H und/oder $CH_3$ und $R_2$ H und/oder Alkylketten mit 1 bis 30 Kohlenstoffatomen darstellt;

(a2) 5 bis 30 Gew.-% eines ersten copolymerisierbaren Vinylmonomers, das zumindest eine Carbonsäure- und/oder Sulfonsäure- und/oder Phosphonsäuregruppe aufweist;

(a3) 1 bis 10 Gew.-% eines zweiten copolymerisierbaren Vinylmonomers, das zumindest eine Epoxygruppe oder eine Säureanhydridfunktion aufweist; und

(a4) 0 bis 20 Gew.-% eines dritten copolymerisierbaren Vinylmonomers, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet; sowie

(b) 5 bis 50 Gew.-% eines Epoxy-Harzes oder einer Mischung aus mehreren Epoxy-Harzen.

**2.** Klebemasse nach Anspruch 1, **dadurch gekennzeichnet, daß** Komponente (a1) ein Acryl- und Methacrylsäureester mit einer Alkylgruppe, die 4 bis 9 Kohlenstoffatome umfaßt, ist.

**3.** Klebemasse nach Anspruch 1 oder Anspruch 2, **dadurch gekennzeichnet, daß** Komponente (a1) aus einer Gruppe ausgewählt ist, die n-Butylacrylat, n-Pentylacrylat, n-Hexylacrylat, n-Heptylacrylat, n-Octylacrylat, n-Nonylacrylat, Laurylacrylat, Stearylacrylat und Behenylacrylat umfaßt.

**4.** Klebemasse nach einem der vorstehenden Ansprüche, **dadurch gekennzeichnet, daß** Komponente (a2) aus einer Gruppe ausgewählt ist, die Itaconsäure, Acrylsäure, Methacrylsäure, Vinylessigsäure, Fumarsäure, Crotonsäure, Aconitsäure, Dimethylacrylsäure, β-Acryloyloxypropionsäure, Trichloracrylsäure, Vinylphosphonsäure und Vinylsulfonsäure umfaßt.

**5.** Klebemasse nach einem der vorstehenden Ansprüche, **dadurch gekennzeichnet, daß** Komponente (a3) aus einer Gruppe ausgewählt ist, die Glycidylmethacrylat Maleinsäureanhydrid und Itaconsäureanhydrid umfaßt.

**6.** Klebemasse nach einem der vorstehenden Ansprüche, **dadurch gekennzeichnet, daß** Komponente (a4) aus einer Gruppe ausgewählt ist, die Vinylester, Vinylether, Vinylhalogenide, Vinylidenhalogenide und Vinylverbindungen mit aromatischen Cyclen und Heterocyclen in α-Stellung umfaßt.

**7.** Klebemasse nach einem der vorstehenden Ansprüche, **dadurch gekennzeichnet, daß** Komponente (a4) aus einer Gruppe ausgewählt ist, die Vinylacetat, Vinylformamid, Vinylpyridin, Ethylvinylether, Vinylchlorid, Vinylidenchlorid und Acrylnitril umfaßt.

**8.** Klebemasse nach einem der vorstehenden Ansprüche, **dadurch gekennzeichnet, daß** Komponente (b) ein Epoxy-Harz ist, das zumindest zwei Epoxy-Gruppen aufweist.

**9.** Klebemasse nach einem der vorstehenden Ansprüche, **dadurch gekennzeichnet, daß** die Komponente (b) ein Epoxy-Harz ist, das ein Molekulargewicht von 100 g/mol bis 25000 g/mol aufweist.

**10.** Verwendung einer Klebemasse nach einem der Ansprüche 1 bis 9 zur Herstellung eines Klebebandes.

**11.** Verwendung nach Anspruch 10, wobei das Klebeband ein- oder beidseitig mit der Klebemasse beschichtet ist.

**12.** Verwendung nach Anspruch 11, wobei die Klebemasse mittels UV-Strahlung oder Elektrodenstrahlung vernetzt ist.

Europäisches Patentamt

# EUROPÄISCHER RECHERCHENBERICHT

Nummer der Anmeldung
EP 04 10 5790

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DE 102 12 831 A (TESA AG) 2. Oktober 2003 (2003-10-02) * das ganze Dokument * ----- | 1-12 | C09J133/08 C09J151/06 C09J153/00 C09J7/00 |
| Y | US 2003/216513 A1 (HATCHER JEFFREY A ET AL) 20. November 2003 (2003-11-20) * das ganze Dokument * ----- | 1-12 | |
| Y | US 4 222 928 A (KAWAMURA TAKEO ET AL) 16. September 1980 (1980-09-16) * das ganze Dokument * ----- | 1-12 | |
| Y | US 5 086 088 A (KITANO SHUICHI ET AL) 4. Februar 1992 (1992-02-04) * das ganze Dokument * ----- | 1-12 | |

RECHERCHIERTE SACHGEBIETE (Int.Cl.7)
C09J
C08F

Der vorliegende Recherchenbericht wurde für alle Patentansprüche erstellt

3

| Recherchenort | Abschlußdatum der Recherche | Prüfer |
|---|---|---|
| München | 14. Januar 2005 | Trauner, H-G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 04 10 5790

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2005

| Im Recherchenbericht angeführtes Patentdokument | Datum der Veröffentlichung | Mitglied(er) der Patentfamilie | Datum der Veröffentlichung |
|---|---|---|---|
| DE 10212831 A | 02-10-2003 | DE 10212831 A1 | 02-10-2003 |
| | | WO 03080689 A1 | 02-10-2003 |
| US 2003216513 A1 | 20-11-2003 | WO 03097756 A1 | 27-11-2003 |
| | | US 2004059058 A1 | 25-03-2004 |
| US 4222928 A | 16-09-1980 | JP 1374721 C | 22-04-1987 |
| | | JP 54152057 A | 29-11-1979 |
| | | JP 57057092 B | 02-12-1982 |
| | | JP 1050882 C | 26-06-1981 |
| | | JP 54066958 A | 29-05-1979 |
| | | JP 55041699 B | 25-10-1980 |
| | | JP 1050886 C | 26-06-1981 |
| | | JP 54083051 A | 02-07-1979 |
| | | JP 55041700 B | 25-10-1980 |
| | | DE 2848719 A1 | 17-05-1979 |
| US 5086088 A | 04-02-1992 | AU 615136 B2 | 19-09-1991 |
| | | AU 4989590 A | 13-09-1990 |
| | | CA 2009566 A1 | 09-09-1990 |
| | | DE 69024678 D1 | 22-02-1996 |
| | | DE 69024678 T2 | 08-08-1996 |
| | | EP 0386909 A2 | 12-09-1990 |
| | | ES 2081926 T3 | 16-03-1996 |
| | | JP 1980533 C | 17-10-1995 |
| | | JP 2272076 A | 06-11-1990 |
| | | JP 7015090 B | 22-02-1995 |
| | | KR 136861 B1 | 25-04-1998 |
| | | MX 170402 B | 19-08-1993 |

EPO FORM P0461

Für nähere Einzelheiten zu diesem Anhang : siehe Amtsblatt des Europäischen Patentamts, Nr.12/82